# EUROPEAN PATENT SPECIFICATION

(11) **EP 3 745 811 B1**
(45) Date of publication and mention of the grant of the patent: **31.08.2022**
(21) Application number: 19177630.1
(22) Date of filing: 31.05.2019
(51) Int. Cl.: H04W 76/16

(54) **METHOD AND SYSTEM FOR PROVIDING A 2G OR 3G SERVICE**
VERFAHREN UND SYSTEM ZUR BEREITSTELLUNG EINES 2G- ODER 3G-DIENSTES
PROCÉDÉ ET SYSTÈME DE FOURNITURE D'UN SERVICE 2G OU 3G

(43) Date of publication of application: 02.12.2020
(73) Proprietor: KONTRON TRANSPORTATION FRANCE SAS, 78066 St Quentin Yvelines Cedex (FR)
(72) Inventor: TANE, Pierre, 91200 Boulogne-Billancourt (FR); GRUET, Christophe, 78180 Montigny le Bretonneux (FR)
(74) Representative: Weiser & Voith Patentanwälte Partnerschaft

(56) References cited:
- WO-A1-2018/146068
- WO-A1-2019/032972
- US-A1- 2018 279 400

## Description

The present invention relates to a method of providing a 2G or 3G service to a mobile station according to a 2G or 3G standard. The invention further relates to a system for performing this method.

The term "2G standard" herein denotes a mobile communications standard of the second generation also known as "Global System for Mobile Communications" (GSM) which includes enhancements like "General Packet Radio Service" (GPRS), "High Speed Circuit Switched Data" (HSCSD) and "Enhanced Data Rates for GSM Evolution" (EDGE), and extensions like "GSM-Railway" (GSM-R). Moreover, "3G standard" denotes a third generation mobile communications standard also know as "Universal Mobile Telecommunications System" (UMTS), including enhancements like "High Speed Downlink Packet Access" (HSDPA) and "High Speed Packet Access+" (HSPA+). Hence, a 2G or 3G service is, e.g., a telephone (speech), data and/or short message service, and can include further services, e.g., a location based service provided in a 2G or 3G network.

In the present specification, the term "mobile station" embraces both a mobile device according to a 2G standard, in the standard generally referred to as "mobile station", and a mobile device according to a 3G standard, in the standard often referred to as "user equipment". Hence, cellular phones and other portable devices that can wirelessly attach to a 2G or a 3G network are examples of a mobile station.

To such a mobile station, 2G or 3G services are provided by a network according to the 2G or to the 3G standard, respectively. While newer cellular networks, particularly according to a 4G or a 5G standard, evolve and are being installed, the existing mobile stations working according to the 2G or 3G standard and the related legacy networks providing the 2G or 3G services are still broadly used and, hence, continue to be required, particularly with respect to specific applications or extensions, e.g., GSM-R for railway communication. Thereby, the efforts both in erection and maintenance of network infrastructure and in support of the respective services are duplicated or even multiplied.

The term "4G standard" herein denotes a mobile communications standard of the fourth generation also known as "Long Term Evolution" (LTE) which includes enhancements like "LTE-Advanced" (LTE-A or LTE+). "5G standard" relates to a fifth generation mobile communications standard released by the 3GPP (3rd Generation Partnership Project) and defined in, i.a., technical specifications 3GPP TS 23.501 and 3GPP TS 23.502. The document WO2019/032972 A1 describes traffic steering and switching between multiple access networks.

It is an object of the present invention to provide a 2G or 3G service to a mobile station in a more efficient way on the basis of existing standards.

In a first aspect, this object is achieved with a method of providing a 2G or 3G service to a mobile station according to a 2G or 3G standard, comprising:
providing a first network according to a 2G or 3G standard which has a first part comprising at least a base station of the first network and a second part comprising the remainder of the first network;
providing a second network according to a 5G standard which has an N3IWF (Non-3GPP Interworking Function) gateway according to the 5G standard;
connecting a server, which hosts said second part of the first network, to the second network as a DN (Data Network) entity in the user plane of the 5G standard;
connecting a 5G user equipment via an interface to said first part of the first network on the one hand and via said N3IWF gateway to the second network on the other hand;
establishing at least one PDU (Protocol Data Unit) session between the 5G user equipment and the server via the N3IWF gateway; and
providing the 2G or 3G service to the mobile station, while it is wirelessly attached to the base station of the first part, by using said first and second parts interconnected via said interface and said at least one PDU session.

Given the flexible and universal applicability of the 5G standard - from mobile communication to telemetry (including autonomous driving) and even to Internet of Things (IoT) applications - a vast deployment of 5G networks can be expected. Hence, mating 2G or 3G services with 5G networks facilitates long term provision of the 2G and 3G services, even when parts of the 2G and 3G systems are no longer maintained in a separate infrastructure.

The present method does not require any adaptation or change in any of the standards and still allows to provide the respective 2G or 3G service to the mobile station. By this method, the second ("5G") network is transparent to the first ("2G/3G") network and the service provided therein. A user of the 2G or 3G mobile station does not experience any differences in service. On the other hand, by utilizing the 5G network when providing the 2G or 3G service of the 2G/3G network, redundancy is reduced. Moreover, the server optionally comprises a plurality of processors or hardware units that are interconnected, e.g., in a computer network, and run different software tasks, respectively, such that elements, i.e., functional entities and connections, of the 2G/3G network may be "virtualised" by these software tasks.

The 5G user equipment is a standard user equipment according to the 5G standard which has an interface to connect to the first part of the 2G/3G network on the one hand and is directly connectable, e.g., via a wire-bound connection, to the N3IWF gateway on the other hand. By using the N3IWF gateway, a separate radio access network in the 5G network is not required for connecting the 5G user equipment to the 5G network.

Moreover, the method can be flexibly applied in that the 2G/3G network can be split at different network levels into its first and second part. In an advantageous embodiment, said first part comprises the radio access portion and said second part comprises the core network portion of the 2G/3G network. In this embodiment, the core network is centralised which potentially reduces the hardware required to provide the 2G or 3G service.

In an alternative embodiment said first part comprises the radio access portion and at least some elements of the core network portion of the 2G/3G network. The split of the 2G/3G network can be adapted, inter alia, to the (geographical) accessibility of the 2G/3G network and its elements.

In a favourable embodiment, a first PDU session is established for a packet switched 2G or 3G service and a second PDU session is established for a circuit switched 2G or 3G service. Advantageously, the first PDU session is an IP session according to the 5G standard and the second PDU session an IP session or an unstructured session according to the 5G standard. Thereby, the first and second parts of the 2G/3G network are seamlessly interconnected via the PDU sessions and the PDU sessions are flexibly adapted to the requirements and the type of the 2G/3G network.

A high bit rate and a reliable interconnection can be achieved, when the first PDU session has a 5G quality of service identifier value of 6. This also ensures that the 5G network is not overloaded with the 2G or 3G service provided by the 2G/3G network. Moreover, it is advantageous when the second PDU session has a 5G quality of service identifier value of 5. This ensures low delays which are typically demanded for a circuit switched service while not imposing excessive load on the 5G network.

In a second aspect, the present invention creates a system for providing a 2G or 3G service to a mobile station according to a 2G or 3G standard, comprising:
a first network according to a 2G or 3G standard which has a first part comprising at least a base station of the first network and a second part comprising the remainder of the first network;
a second network according to a 5G standard which has an N3IWF gateway according to the 5G standard;
a server connected to the second network as a DN entity in the user plane of the 5G standard, which server is configured to host said second part of the first network;
a 5G user equipment connected via an interface to said first part of the first network on the one hand and via said N3IWF gateway to the second network on the other hand,
wherein the 5G user equipment is configured to establish at least one PDU session between the 5G user equipment and the server via the N3IWF gateway, and the first network is configured to provide the 2G or 3G service to the mobile station, while it is wirelessly attached to the base station of the first part, by using said first and second parts interconnected via said interface and said at least one PDU session.

In an advantageous embodiment of the system, the 5G user equipment is embedded in the N3IWF gateway. Hence, the required hardware is further reduced and the connection of the 5G user equipment to the 5G network via the N3IWF is eased.

Relating to further embodiments of the system and the advantages thereof, it is referred to the above statements on the present method.

The invention will now be described in further detail by means of exemplary embodiments thereof under reference to the enclosed drawings, in which:
Fig. 1 shows a system for providing a 2G or 3G service according to the present invention in a schematic block diagram;
Fig. 2 shows an alternative embodiment of the system of Fig. 1 in a schematic block diagram; and
Fig. 3 shows a method of providing a 2G or 3G service in the systems of Figs. 1 or 2 in a flowchart.

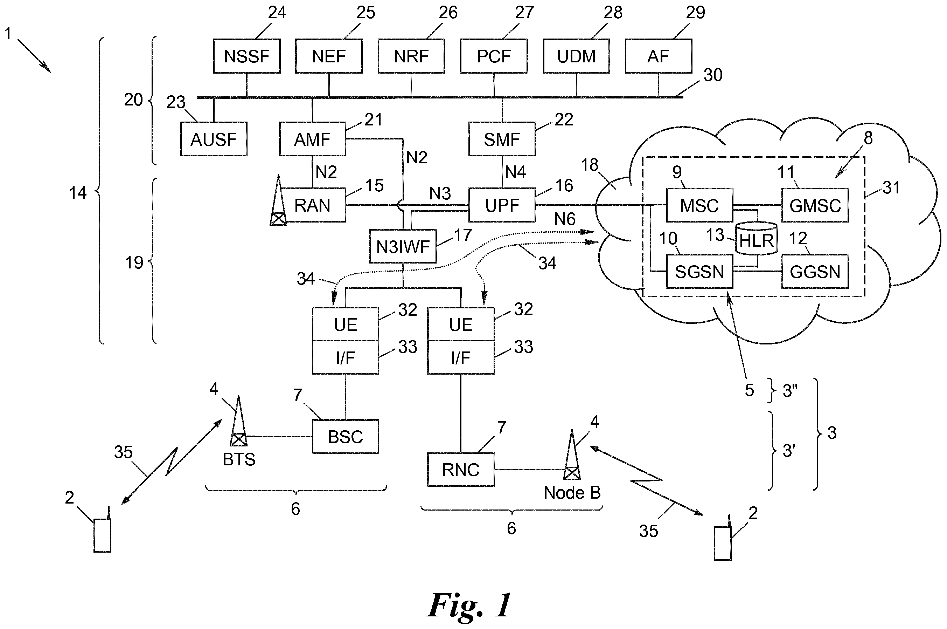

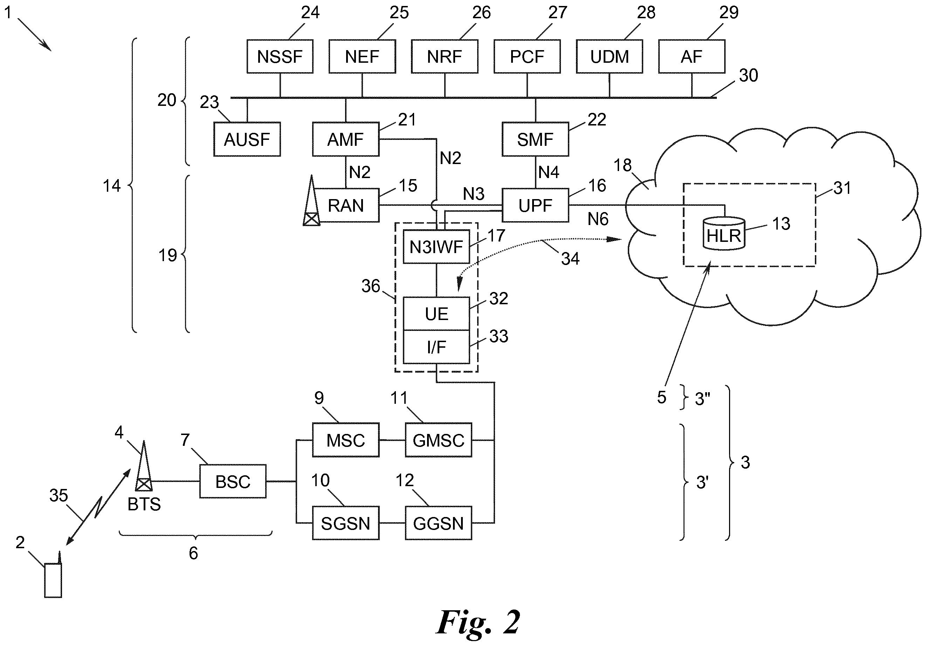

Each of Figs. 1 and 2 shows an exemplary embodiment of a system 1 which provides a 2G or 3G service to a mobile station 2 according to a 2G or 3G standard. In both embodiments, the system 1 comprises a first network 3, which is a cellular network according to the 2G standard or to the 3G standard. The first ("2G/3G") network 3 has a first part 3' and a second part 3". The first part 3' comprises at least one base station 4 of the 2G/3G network 3. The term "base station", in this context, also embraces a base station that is referred to as "Node B" in the 3G standard. The second part 3" of the 2G/3G network 3 comprises the remainder 5 of the 2G/3G network 3, i.e., those elements of the 2G/3G network 3 that are not comprised by the first part 3'.

In the example of Fig. 1, the first part 3' comprises a full radio access portion 6 of the 2G/3G network 3, i.e., at least one base station 4 and its base station controller 7, which is usually denoted as BSC ("Base Station Controller") in the 2G standard and as RNC ("Radio Network Controller") in the 3G standard. Hence, the remainder 5 of the 2G/3G network 3 in this example is the core network portion 8 of the 2G/3G network 3, comprising an MSC ("Mobile-service Switching Centre") 9 and an SGSN ("Serving GPRS Support Node") 10, respectively connected to the base station controller 7, and, connected to the MSC 9 and the SGSN 10, a GMSC ("Gateway MSC") 11 and a GGSN ("Gateway GPRS Support Node") 12, as well as, i.a., an HLR ("Home Location Register") 13 connected to the MSC 9 and the SGSN 10, as known in the art.

In the example of Fig. 2, the first part 3' of the 2G/3G network 3, in addition to the radio access portion 6, comprises at least some elements of the core network portion 8 of the 2G/3G network 3, e.g., the MSC 9 and the SGSN 10 and at least a part of the GMSC 11 and of the GGSN 12, respectively. Hence, the remainder 5 in the second part 3" is reduced to the remaining elements of the 2G/3G network 3, e.g., the HLR 13 etc.

In Figs. 1 and 2, the system 1 further comprises a second ("5G") network 14. The 5G network 14 is a cellular network according to a 5G standard as issued by the "3rd Generation Partnership Project" (3GPP). In accordance with the 5G standard, the 5G network 14 comprises, i.a., a 5G RAN ("Radio Access Network") 15, a UPF ("User Plane Function") 16, an N3IWF ("Non-3GPP InterWorking Function") gateway 17, and a DN ("Data Network") 18 in its user plane 19, and, in its SBA ("Service Based Architecture") 20, an AMF ("Access and Mobility Management Function") 21, an SMF ("Session Management Function") 22 and further elements, e.g., an AUSF ("Authentication Server Function") 23, an NSSF ("Network Slice Selection Function") 24, an NEF (Network Exposure Function") 25, an NRF ("Network Repository Function") 26, an PCF ("Policy Control Function") 27, a UDM ("Unified Data Management") 28, and an AF (Application Function") 29 which are interconnected over a data bus 30.

The system 1 also comprises a server 31, which is connected to the 5G network 14 in the DN 18 thereof such that the server 31 becomes a DN entity in the 5G network's user plane 19 according to the 5G standard. The server 31 is configured to host the second part 3" which comprises the remainder 5 of the 2G/3G network 3. To this end, the server 31 may, e.g., be a single hardware unit running one or more (software) tasks implementing the remainder 5; in other embodiments, the server 31 comprises two or more interconnected hardware units or processors each of which runs one or more separate software tasks implementing the remainder 5.

A 5G user equipment 32, i.e., a user equipment ("UE") according to the 5G standard, is connected via an interface 33 to the first part 3' of the 2G/3G network 3, on the one hand. The interface 33 is adapted to the first part 3', i.e., to the elements of the 2G/3G network 3 comprised in its first part 3', and provides a connection, e.g., a wire-bound connection, between the first part 3' of the 2G/3G network 3 and the 5G user equipment 32. On the other hand, the 5G user equipment 32 is connected to the 5G network 14 via the N3IWF gateway 17 using a wire-bound or a wireless connection according to the 5G standard.

The connection of the 5G user equipment 32 to the 5G network 14 is a standard 5G N3IWF connection, as particularly described in the 3GPP technical specification TS 24.502, such that a 5G RAN 15 is not required for connecting the 5G user equipment 32 to the 5G network 14. The 5G user equipment 32 is registered in the 5G network 14 via the N3IWF gateway 17 by means of the AMF 21 using a standardized N2 connection (denoted "reference point" in the 5G standard) between the N3IWF gateway 17 and the AMF 21. By an N3 reference point between the N3IWF gateway 17 and the UPF 16, the 5G user equipment 32 gains access to the user plane 19 which is established and managed by the SMF 22 connected to the UPF 16 via an N4 reference point according to the 5G standard.

The 5G user equipment 32 is configured to establish at least one PDU ("Protocol Data Unit") session 34 according to the 5G standard. Each PDU session 34 is established in the user plane 19 of the 5G network 14 between the 5G user equipment 32 and the server 31 via the N3IWF gateway 17 using an N6 reference point between the UPF 16 and the DN 18 according to the 5G standard.

When the (at least one) PDU session 34 has been established, the 2G/3G network 3 provides the 2G or 3G service to the mobile station 2 for the time during which the mobile station 2 is wirelessly attached to the base station 4. In this context, "wirelessly attached" refers to a wireless communication connection 35 between the mobile station 2 and the base station 4 according to the 2G or 3G standard.

Each established PDU session 34 which is managed by the 5G network 14 according to the 5G standard provides a tunnel between the interface 33 of the 5G user equipment 32 and the server 31. The tunnel is fully transparent to the 2G/3G network 3. By providing the connection between the first part 3' of the 2G/3G network 3 and the 5G user equipment 32, the interface 33 links the first part 3' to the one or more transparent PDU sessions 34 established by the 5G user equipment 32. Thereby, the 2G/3G network 3 can provide a 2G or 3G service to a mobile station 2 wirelessly attached to its base station 4, by using the first and second parts 3', 3" which are (transparently) interconnected via the interface 33 and the PDU session/s 34 between the 5G user equipment 32 and the server 31.

As shown in the example of Fig. 1, the first part 3' of the 2G/3G network 3 optionally comprises several base stations 4 or several (here: two) radio access portions 6. In this example, a respective mobile station 2 is wirelessly attached to the base station 4 of each radio access portion 6. The 2G or 3G service provided by the 2G/3G network 3 may, e.g., be a voice communication or a short message service between the two mobile stations 2. Of course, such a service can similarly be provided between two mobile stations 2 which are wirelessly attached to one and the same base station 4 or to different base stations 4 of one and the same radio access portion 6, as known in the art.

As shown in this example, a separate 5G user equipment 32 (and/or interface 33) may be provided for each connection to the first part 3' of the 2G/3G network 3. Alternatively, a single 5G user equipment 32 - and optionally a single interface 33 - may be provided for connecting to the first part 3' of the 2G/3G network 3, as shown in the example of Fig. 2. While both Figs. 1 and 2 show only a single (Fig. 2) or two (Fig. 1) base stations 4 and radio access portions 6, respectively, it is understood that the first part 3' of the 2G/3G network 3 may comprise more base stations 4 and/or radio access portions 6.

The PDU session/s 34 optionally depend/s on the 2G or 3G service/s provided to the mobile station 2 while these are wirelessly attached to the base station 4. For example, the 5G user equipment 32 may be configured to establish a first PDU session 34 for a packet switched 2G or 3G service and a second PDU session 34 for a circuit switched 2G or 3G service (not shown in detail in Figs. 1 or 2). Therein, the first PDU session 34 is, e.g., an IP session according to the 5G standard and the second PDU session 34 is, e.g., an IP session or an unstructured session according to the 5G standard, depending on the DN 18 and/or the 2G/3G network 3 and its requirements. In this case, the first PDU session 34 (for the packet switched 2G or 3G service) may have a 5G quality of service identifier ("5QI") value of 6, i.e., 5QI = 6 according to the 5G standard; the second PDU session 34 (for the circuit switched 2G or 3G service) may have a 5QI value of 5 (5QI = 5). However, these are examples; different session types and/or 5QI values may be chosen. Moreover, only one or more than two PDU sessions 34 may be established by the 5G user equipment 32. Each PDU session 34 is either permanent or is established periodically or upon request for a 2G or 3G service.

The 5G user equipment 32 may be a standard user equipment, e.g., a 5G cell phone or the like. In an optional embodiment, however, the 5G user equipment 32 is embedded in the N3IWF gateway 17 - as symbolised by the dashed box 36 in Fig. 2 - such that connection of the 5G user equipment 32 to the 5G network 14 via the N3IWF gateway 17 is permanent.

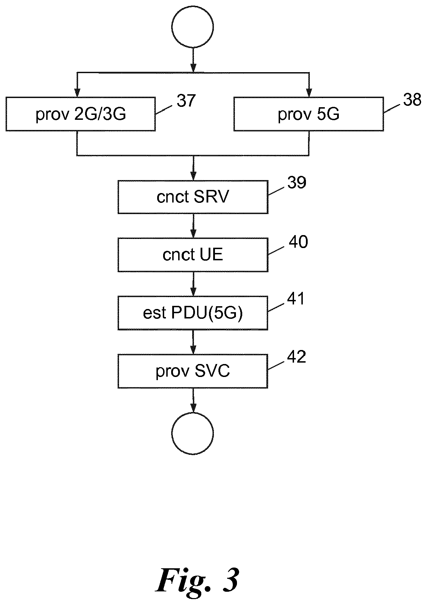

Fig. 3 shows a method of providing the 2G or 3G service in the system 1. In step 37 of the method, the 2G/3G network 3 is provided which is split into the first part 3' comprising at least one base station 4 of the 2G/3G network 3 and the second part 3" comprising the remainder 5 of the first network 3. In step 38, the 5G network 14 with its N3IWF gateway 17 is provided. Steps 37 and 38 may be performed in any order, even concurrently.

In further step 39, the server 31 hosting the second part 3" is connected to the 5G network 14 as a DN entity in the user plane 19. In step 40, the 5G user equipment 32 is connected via the interface 33 to the first part 3' of the 2G/3G network 3 on the one hand and via the N3IWF gateway 17 to the 5G network 14, on the other hand.

While steps 39 and 40 are shown subsequent to steps 37 and 38 in the example of Fig. 3, steps 37, 38, 39 and 40 may generally be performed in any order. Also, the sub-steps of step 40, i.e., connecting to the 2G/3G network 3 on the one hand and to the 5G network 14 on the other hand, can be performed in any order.

In subsequent step 41, the PDU session/s 34 is/are established between the 5G user equipment 32 and the server 31 via the N3IWF gateway 17. In final step 42, the 2G or 3G service/s is/are provided to the mobile station 2 by using the first and second parts 3', 3" interconnected via the interface 33 and the PDU session/s 34. It is understood, that any 2G or 3G service can only be provided to the mobile station 2 while it is wirelessly attached to the base station 4.

The present invention is not restricted to the specific embodiments described in detail herein, but encompasses all those variants, combinations and modifications thereof that fall within the scope of the appended claims.

## Claims

1. A method of providing a 2G or 3G service to a mobile station (2) according to a 2G or 3G standard, comprising:
providing (37) a first network (3) according to a 2G or 3G standard which has a first part (3') comprising at least a base station (4) of the first network (3) and a second part (3") comprising the remainder (5) of the first network (3);
providing (38) a second network (14) according to a 5G standard which has an N3IWF gateway (17) according to the 5G standard;
connecting (39) a server (31), which hosts said second part (3") of the first network (3), to the second network (14) as a DN entity in the user plane (19) of the 5G standard;
connecting (40) a 5G user equipment (32) via an interface (33) to said first part (3') of the first network (3) on the one hand and via said N3IWF gateway (17) to the second network (14) on the other hand;
establishing (41) at least one PDU session (34) between the 5G user equipment (32) and the server (31) via the N3IWF gateway (17); and
providing (42) the 2G or 3G service to the mobile station (2), while it is wirelessly attached to the base station (4) of the first part (3"), by using said first and second parts (3', 3") interconnected via said interface (33) and said at least one PDU session (34).

2. The method according to claim 1, wherein said first part (3') comprises the radio access portion (6) and said second part (3") comprises the core network portion (8) of the first network (3).

3. The method according to claim 1, wherein said first part (3') comprises the radio access portion (6) and at least some elements (9, 10, 11, 12) of the core network portion (8) of the first network (3).

4. The method according to any one of claims 1 to 3, wherein a first PDU session (34) is established for a packet switched 2G or 3G service and a second PDU session (34) is established for a circuit switched 2G or 3G service.

5. The method according to claim 4, wherein the first PDU session (34) is an IP session according to the 5G standard and the second PDU session (34) an IP session or an unstructured session according to the 5G standard.

6. The method according to claim 4 or 5, wherein the first PDU session (34) has a 5G quality of service identifier value of 6.

7. The method according to any one of claims 4 to 6, wherein the second PDU session (34) has a 5G quality of service identifier value of 5.

8. A system for providing a 2G or 3G service to a mobile station (2) according to a 2G or 3G standard, comprising:
a first network (3) according to a 2G or 3G standard which has a first part (3') comprising at least a base station (4) of the first network (3) and a second part (3") comprising the remainder (5) of the first network (3);
a second network (14) according to a 5G standard which has an N3IWF gateway (17) according to the 5G standard;
a server (31) connected to the second network (14) as a DN entity in the user plane (19) of the 5G standard, which server (31) is configured to host said second part (3") of the first network (3);
a 5G user equipment (32) connected via an interface (33) to said first part (3') of the first network (3) on the one hand and via said N3IWF gateway (17) to the second network (14) on the other hand,
wherein the 5G user equipment (32) is configured to establish at least one PDU session (34) between the 5G user equipment (32) and the server (31) via the N3IWF gateway (17), and the first network (3) is configured to provide the 2G or 3G service to the mobile station (2), while it is wirelessly attached to the base station (4) of the first part (3'), by using said first and second parts (3', 3") interconnected via said interface (33) and said at least one PDU session (34).

9. The system according to claim 8, wherein said first part (3') comprises the radio access portion (6) and said second part (3") comprises the core network portion (8) of the first network (3).

10. The system according to claim 8, wherein said first part (3') comprises the radio access portion (6) and at least some elements (9, 10, 11, 12) of the core network portion (8) of the first network (3).

11. The system according to any one of claims 8 to 10, wherein the 5G user equipment (32) is configured to establish a first PDU session (34) for a packet switched 2G or 3G service and a second PDU session (34) for a circuit switched 2G or 3G service.

12. The system according to claim 11, wherein the first PDU session (34) is an IP session according to the 5G standard and the second PDU session (34) an IP session or an unstructured session according to the 5G standard.

13. The system according to claim 11 or 12, wherein the first PDU session (34) has a 5G quality of service identifier value of 6.

14. The system according to any one of claims 11 to 13, wherein the second PDU session (34) has a 5G quality of service identifier value of 5.

15. The system according to any one of claims 7 to 12, wherein the 5G user equipment (32) is embedded in the N3IWF gateway (17).

## Patentansprüche

1. Verfahren zum Bereitstellen eines 2G- oder 3G-Dienstes für eine Mobilstation (2) gemäß einem 2G- oder 3G-Standard, umfassend:
Bereitstellen (37) eines ersten Netzes (3) gemäß einem 2G-oder 3G-Standard, das einen ersten Teil (3') hat, der zumindest eine Basisstation (4) des ersten Netzes (3) umfasst, und einen zweiten Teil (3"), der den Rest (5) des ersten Netzes (3) umfasst;
Bereitstellen (38) eines zweiten Netzes (14) gemäß einem 5G-Standard, das ein N3IWF-Gateway (17) gemäß dem 5G-Standard hat;
Verbinden (39) eines Servers (31), der den zweiten Teil (3") des ersten Netzes (3) hostet, mit dem zweiten Netz (14) als DN-Einheit in der User Plane (19) des 5G-Standards;
Verbinden (40) eines 5G-User Equipments (32) über eine Schnittstelle (33) mit dem ersten Teil (3') des ersten Netzes (3) einerseits und über das N3IWF-Gateway (17) mit dem zweiten Netz (14) anderseits;
Errichten (41) zumindest einer PDU-Session (34) zwischen dem 5G-User Equipment (32) und der Server (31) über das N3IWF-Gateway; und
Bereitstellen (42) des 2G- oder 3G-Dienstes für die Mobilstation (2), während sie drahtlos an die Basisstation (4) des ersten Teils (3") angeschlossen ist, unter Verwendung der über die Schnittstelle (33) und die zumindest eine PDU-Session (34) verbundenen ersten und zweiten Teile (3', 3").

2. Verfahren nach Anspruch 1, wobei der erste Teil (3') den Radio-Access-Teil (6) und der zweite Teil (3") den Core-Network-Teil (8) des ersten Netzes (3) umfasst.

3. Verfahren nach Anspruch 1, wobei der erste Teil (3') den Radio-Access-Teil (6) und zumindest einige Elemente (9, 10, 11, 12) des Core-Network-Teils (8) des ersten Netzes (3) umfasst.

4. Verfahren nach einem der Ansprüche 1 bis 3, wobei eine erste PDU-Session (34) für einen paketvermittelten 2G- oder 3G-Dienst und eine zweite PDU-Session (34) für einen leitungsvermittelten 2G- oder 3G-Dienst errichtet wird.

5. Verfahren nach Anspruch 4, wobei die erste PDU-Session (34) eine IP-Session gemäß dem 5G-Standard und die zweite PDU-Session (34) eine IP-Session oder eine unstrukturierte Session gemäß dem 5G-Standard ist.

6. Verfahren nach Anspruch 4 oder 5, wobei die erste PDU-Session (34) eine 5G-Quality-of-Service-Kennung von 6 hat.

7. Verfahren nach einem der Ansprüche 4 bis 6, wobei die zweite PDU-Session (34) eine 5G-Quality-of-Service-Kennung von 5 hat.

8. System zum Bereitstellen eines 2G- oder 3G-Dienstes für eine Mobilstation (2) gemäß einem 2G- oder 3G-Standard, umfassend:
ein erstes Netz (3) gemäß einem 2G- oder 3G-Standard, das einen ersten Teil (3') hat, der zumindest eine Basisstation (4) des ersten Netzes (3) umfasst, und einen zweiten Teil (3"), der den Rest (5) des ersten Netzes (3) umfasst;
ein zweites Netz (14) gemäß einem 5G-Standard, das ein N3IWF-Gateway (17) nach dem 5G-Standard hat;
einen Server (31), der mit dem zweiten Netz (14) als eine DN-Entität in der User Plane (19) des 5G-Standards verbunden ist, wobei der Server (31) dazu ausgebildet ist, den zweiten Teil (3") des ersten Netzes zu hosten (3);
ein 5G-User Equipment (32), das einerseits über eine Schnittstelle (33) mit dem ersten Teil (3') des ersten Netzes (3) und anderseits über das N3IWF-Gateway (17) mit dem zweiten Netz (14) verbunden ist,
wobei das 5G-User Equipment (32) dazu ausgebildet ist, zumindest eine PDU-Session (34) zwischen dem 5G-User Equipment (32) und dem Server (31) über das N3IWF-Gateway (17) zu errichten, und das erste Netz (3) dazu ausgebildet ist, den 2G- oder 3G-Dienst für die Mobilstation (2), während diese drahtlos an die Basisstation (4) des ersten Teils (3') angeschlossen ist, unter Verwendung der über die Schnittstelle (33) und die zumindest eine PDU-Session (34) verbundenen ersten und zweiten Teile (3', 3") bereitzustellen.

9. System nach Anspruch 8, wobei der erste Teil (3') den Radio-Access-Teil (6) und der zweite Teil (3") den Core-Network-Teil (8) des ersten Netzes (3) umfasst.

10. System nach Anspruch 8, wobei der erste Teil (3') den Radio-Access-Teil (6) und zumindest einige Elemente (9, 10, 11, 12) des Core-Network-Teils(8) des ersten Netzes (3) umfasst.

11. System nach einem der Ansprüche 8 bis 10, wobei das 5G-User Equipment (32) dazu ausgebildet ist, eine erste PDU-Session (34) für einen paketvermittelten 2G- oder 3G-Dienst und eine zweite PDU-Session (34) für einen leitungsvermittelten 2G-oder 3G-Dienst zu errichten.

12. System nach Anspruch 11, wobei die erste PDU-Session (34) eine IP-Session gemäß dem 5G-Standard und die zweite PDU-Session (34) eine IP-Session oder eine unstrukturierte Session gemäß dem 5G-Standard ist.

13. System nach Anspruch 11 oder 12, wobei die erste PDU-Session (34) eine 5G-Quality-of-Service-Kennung von 6 hat.

14. System nach einem der Ansprüche 11 bis 13, wobei die zweite PDU-Session (34) eine 5G-Quality-of-Service-Kennung von 5 hat.

15. System nach einem der Ansprüche 7 bis 12, wobei das 5G-User Equipment (32) in das N3IWF-Gateway (17) eingebettet ist.

## Revendications

1. Procédé de la mise en place d'un service 2G ou 3G à une station mobile (2) selon une norme 2G ou 3G, comprenant :
la mise en place (37) d'un premier réseau (3) selon une norme 2G ou 3G qui a une première partie (3') comprenant au moins une station de base (4) du premier réseau (3) et une seconde partie (3") comprenant le reste (5) du premier réseau (3) ;
la mise en place (38) d'un second réseau (14) selon une norme 5G qui a une passerelle N3IWF (17) selon la norme 5G ;
la connexion (39) d'un serveur (31) qui est l'hôte de ladite seconde partie (3") du premier réseau (3), au second réseau (14) en tant qu'une entité DN dans le plan utilisateur (19) de la norme 5G ;
la connexion (40) d'un équipement utilisateur 5G (32) via une interface (33) à ladite première partie (3') du premier réseau (3) d'une part, et via ladite passerelle N3IWF (17) audit second réseau (14) d'autre part ;
l'établissement (41) d'au moins une session PDU (34) entre l'équipement utilisateur 5G (32) et le serveur (31) via la passerelle N3IWF (17) ; et
la mise en place (42) du service 2G ou 3G à la station mobile (2), pendant qu'il est raccordé sans fil à la station de base (4) de la première partie (3"), en utilisant lesdites première et seconde parties (3', 3") interconnectées via ladite interface (33) et ladite au moins une session PDU (34).

2. Procédé selon la revendication 1, dans lequel ladite première partie (3') comprend la partie d'accès radio (6) et ladite seconde partie (3") comprend la partie de réseau centrale (8) du premier réseau (3).

3. Procédé selon la revendication 1, dans lequel ladite première partie (3') comprend la partie d'accès radio (6) et au moins quelques éléments (9, 10, 11, 12) de la partie de réseau centrale (8) du premier réseau (3).

4. Procédé selon l'une quelconque des revendications 1 à 3, dans lequel une première session PDU (34) est établie pour un service de commutation par paquets 2G ou 3G et une seconde session PDU (34) est établie pour un service de commutation par circuits 2G ou 3G.

5. Procédé selon la revendication 4, dans lequel la première session PDU (34) est une session IP selon la norme 5G et la seconde session PDU (34) est une session IP ou une session non structurée selon la norme 5G.

6. Procédé selon la revendication 4 ou 5, dans lequel la première session PDU (34) possède une valeur d'identifieur de service de qualité 5G de 6.

7. Procédé selon l'une quelconque des revendications 4 à 6, dans lequel la seconde session PDU (34) possède une valeur d'identifieur de service de qualité 5G de 5.

8. Système pour la mise en place d'un service 2G ou 3G à une station mobile (2) selon une norme 2G ou 3G, comprenant :
un premier réseau (3) selon une norme 2G ou 3G qui a une première partie (3') comprenant au moins une station de base (4) du premier réseau (3) et une seconde partie (3") comprenant le reste (5) du premier réseau (3) ;
un second réseau (14) selon une norme 5G qui a une passerelle N3IWF (17) selon la norme 5G ;
un serveur (31) connecté au second réseau (14) en tant qu'une entité DN dans le plan utilisateur (19) de la norme 5G, lequel serveur (31) est conçu pour être l'hôte de ladite deuxième partie (3") du premier réseau (3) ;
un équipement utilisateur 5G (32) connecté via une interface (33) à ladite première partie (3') du premier réseau (3) d'une part, et via ladite passerelle N3IWF (17) audit second réseau (14) d'autre part,
dans lequel l'équipement utilisateur 5G (32) est conçu pour établir au moins une session PDU (34) entre l'équipement utilisateur 5G (32) et le serveur (31) via la passerelle N3IWF (17), et le premier réseau (3) est conçu pour mettre en place le service 2G ou 3G à la station mobile (2) pendant qu'il est raccordé sans fil à la station de base (4) de la première partie (3'), en utilisant lesdites première et seconde parties (3', 3") interconnectées via ladite interface (33) et ladite au moins une session PDU (34).

9. Système selon la revendication 8, dans lequel ladite première partie (3') comprend la partie d'accès radio (6) et ladite seconde partie (3") comprend la partie de réseau centrale (8) du premier réseau (3).

10. Système selon la revendication 8, dans lequel ladite première partie (3') comprend la partie d'accès radio (6) et au moins quelques éléments (9, 10, 11, 12) de la partie de réseau centrale (8) du premier réseau (3).

11. Système selon l'une quelconque des revendications 8 à 10, dans lequel l'équipement utilisateur 5G (32) est conçu pour établir une première session PDU (34) pour un service de commutation par paquets 2G ou 3G et une seconde session PDU (34) pour un service de commutation par circuits 2G ou 3G.

12. Système selon la revendication 11, dans lequel la première session PDU (34) est une session IP selon la norme 5G et la seconde session PDU (34) est une session IP ou une session non structurée selon la norme 5G.

13. Système selon la revendication 11 ou 12, dans lequel la première session PDU (34) possède une valeur d'identifieur de service de qualité 5G de 6.

14. Système selon l'une quelconque des revendications 11 à 13, dans lequel la seconde session PDU (34) possède une valeur d'identifieur de service de qualité 5G de 5.

15. Système selon l'une quelconque des revendications 7 à 12, dans lequel l'équipement utilisateur 5G (32) est incorporé dans la passerelle N3IWF (17).
